# EUROPEAN PATENT SPECIFICATION

(11) **EP 3 081 394 B1**
(45) Date of publication and mention of the grant of the patent: **22.11.2017**
(21) Application number: 16165208.6
(22) Date of filing: 14.04.2016
(51) Int. Cl.: B60C 5/14, B60C 1/00, B29D 30/08, B29D 30/06

(54) **TIRE WITH SPLICED MULTILAYERED FILM INNERLINER**
REIFEN MIT GESPLEISSTER MULTILAGENINNENSCHICHT
PNEU AVEC FILM INTÉRIEUR MULTICOUCHE ÉPISSÉ

(30) Priority: 16.04.2015 US 201514687970
(43) Date of publication of application: 19.10.2016
(73) Proprietor: The Goodyear Tire & Rubber Company, Akron, Ohio 44316 (US)
(72) Inventor: LEE, Byoung Jo, Copley, OH Ohio 44321 (US); DUNKER, Philip Alan, Stow, OH 44224 (US); BRAINERD, II, John Fleming, Wadsworth, OH Ohio 44281 (US)
(74) Representative: Kutsch, Bernd

(56) References cited:
- EP-A1- 2 839 972
- EP-A2- 0 706 878
- JP-A- 2012 056 454

## Description

### Field of the Invention

The present invention relates to a pneumatic tire having a multilayered film innerliner with rubber reinforced spliced overlapping ends, and to a method of manufacturing such a tire.

### Background of the Invention

Pneumatic tires usually contain innerliner layers to retard permeation of air from the tire's cavity into the tire carcass. Such innerliner, or barrier, layers are usually in a form of layers comprised of butyl rubber or halogenated butyl rubber (sometimes referred to as halobutyl rubber) based rubber compositions which provide resistance to permeability of air. To adequately promote resistance to air permeability, such innerliner is typically provided as a sufficiently thick layer which, in turn, may add significant weight to the tire.

Accordingly, various alternative thin air permeability resistant films have been proposed for pneumatic tire innerliners which are significantly lighter in weight. For example, and not intended to be limiting, see US-A-4,928,741, US-A-5,040,583, US-A-5,938,869, US-B-6,359,071, US-B-6,376,598, US-B-6,843,292, US-B-6,861,470, US-B-8,544,517, US-A 2001/0041762, US-A-2013/0101821, US-A-2013/0192736, US-A-2013/0199686, US-A-2014/0227499, US-A-2014/0242370, WO-A-2007/050061, WO-A-2007/050236, WO-A-2007/070728, WO-A-2007/111584, WO-A-2008/051253, EP-A-0 706 878, EP-A-0 722 850, EP-A-1 726 620 and EP-A-1 880 871.

Various thin films of various polymers have been proposed for a tire innerliner layer comprised of, for example, a combination of thermoplastic resin which may contain a blend or dispersion of various polymers or copolymers.

The such films may be provided, for example, with a coating on both of its sides with an RFL (resorcinol/formaldehyde latex based) adhesive to promote adhering of overlapping ends of the film together, particularly where the film is placed on the circumferential inner surface of the tire.

For this invention, it is desired to provide a pneumatic tire having a multilayered innerliner as an innerliner film comprising a laminate of multiple layers of graduated physical properties having an inner surface covering the tire carcass's surface in a circumferential direction and an outer surface adjacent to an internal air cavity of said tire, wherein the multilayered innerliner is a sheet which has its two end portions overlapping each other to form a splice comprised of an inner first end portion of the film adjacent to the tire rubber carcass and an outer second end portion of the film adjacent to the internal air cavity of the pneumatic tire.

In particular, the innerliner film comprises from 2 through 7, alternately from 2 through 5, such as 2, 3, 4 or 5, generally co-extruded, layers comprising a thermoplastic polyamide-based polymer with dispersed polymer domains therein which are composed of at least one of copolymer or mixture comprising a polyamide based segment and a polyoxyalkylene diamine.

The modulus physical property (film modulus) of each of the layers of the innerliner film increases from innermost layer adjacent to the tire rubber carcass to the outermost layer of the innerliner film. A purpose of the graduated modulus property of the innerliner film layers is to promote compatibility of the innerliner film with the tire rubber carcass by having its lowest modulus layer positioned adjacent to the tire's rubber carcass.

The modulus (which might be referred to herein as a film modulus) is presented by ASTM D882 Test at a 25 percent strain (23°C) using a cross head speed of 300 mm/min and reported in terms of MPa (MegaPascels) stress under such conditions. For the Test, the film is clamped (gripped) between two clamps spaced apart from each other by 30 mm and then stretched in the direction of its formative extrusion (in the film's direction of formation by extrusion from an extruder). The overall film modulus of the multilayered film may be tested as well in this manner. The individual film layers of the multilayered film may be individually submitted to the film modulus test by, for example, individually extruding each film layer and testing each individually extruded film in this manner.

The outer and inner surfaces (surfaces of the inner and outer film layers) of the multilayered film may be tested for their hardness (with the softest film layer being the innermost film layer adjacent to the tire's rubber carcass (to promote compatibility between the multilayered film and tire rubber carcass) and the hardest film layer being the outermost film layer adjacent to the tires internal air cavity. A suitable hardness test is an Instrumented Indentation Test as ASTM Test E2546-7. A descriptive "Introduction to Instrumented Indentation Testing" by J. Hay may be found in Experimental Techniques, Pages 66 through 72, Nov/Dec 2009, Society for Experimental Mechanics. The Indentation Test reportedly may be used for testing thin films to measure hardness (H) and Young's modulus (E) as a relationship between stress and strain for small volumes of films when the film deformation is elastic.

The multilayered innerliner film may be prepared, for example, by co-extrusion of the polyamide-based polymer containing various levels of the dispersed domains to provide the graduated moduli of the individual co-extruded film layers.

To enable and promote a durable splice for the multilayered innerliner film, (the multilayered film sheet) it is proposed that the innerliner splice comprises:
(A) the overlapping inner first and outer second end portions of said innerliner film bonded through a first rubber strip positioned therebetween, wherein said first rubber strip extends in a circumferential direction beyond said splice on the inner surface of the innerliner film to further bond a combination of a surface of said inner end portion of the innerliner film, said inner surface of the innerliner film and said tire rubber carcass, and
(B) a second rubber strip abridging and bonded to the a surface of said outer second end portion of the innerliner film and outer surface of said innerliner film adjacent to the internal air cavity of said pneumatic tire.

EP-A-2 839 972 describes a tire having a laminated innerliner with a reinforced splice.

EP-A-0 706 878 describes a further innnerliner of a pneumatic tire comprising a laminate structure.

### Summary and Practice of the Invention

The invention relates to a tire in accordance with claim 1 and to a method in accordance with claim 11.

Dependent claims refer to preferred embodiments of the invention.

In accordance with a preferred aspect of this invention, a pneumatic tire is provided having an innerliner comprising a multilayered innerliner film covering at least a portion of the tire carcass's inner surface in a circumferential direction; wherein said multilayered innerliner film contains an RFL adhesive coating on both of its sides and comprises from 2 through 7, alternately from 2 through 5 layers; wherein the multilayered innerliner film has a (film) modulus in a range of from 11 to 20, alternately from 12 to 18, MPa; wherein the overall (film) modulus of each of the layers of the multilayered film successively increases from its innermost layer adjacent to the tire rubber carcass (through its RFL coating) to and including its outermost layer by at least one MPa; wherein said multilayered film has two end portions overlapping each other to form a splice comprising an inner first end portion adjacent to the tire rubber carcass and an outer second end portion adjacent to the internal air cavity of the pneumatic tire; wherein said innerliner film splice comprises: (A) the overlapping inner first and outer second end portions of said innerliner film bonded through a first rubber strip positioned therebetween, wherein said first rubber strip extends circumferentially beyond said splice on the inner surface of the innerliner film to further bond a combination of a surface of said inner end portion of the innerliner film, said inner surface of the innerliner film and said tire rubber carcass, and (B) a second rubber strip abridging and bonded to the a surface of said outer second end portion of the innerliner film and outer surface of said innerliner film adjacent to the internal air cavity of said pneumatic tire; wherein the layers of said innerliner film preferably comprise: (1) from 40 to 85 weight percent of a thermoplastic polyamide-based polymer or resin, which may comprises, for example, a copolymer of a diamine and dicarboxylic acid, and (2) a range of from 15 to 60 weight percent of a dispersion contained in said thermoplastic polyamide-based polymer comprising at least one of: (a) copolymer or mixture comprising a polyamide-based segment and a polyether-based segment, and (b) a polymer comprising at least one of polyalkylene glycol (e.g. at least one of polyethyleneglycol, polypropyleneglycol and polytetramethylene glycol), polyoxyalkylene diamine (e.g. at least one of polyoxyethylene diamine, polyoxypropylene diamine and polyoxytetramethylene diamine) and copolymers thereof; wherein the concentration of said dispersion contained in said thermoplastic polyamide based polymer of the individual layers of said multilayered innerliner film is increased by at least five (5) percent for each successive layer extending from the aforesaid inner layer to and including the outermost film layer of the multilayered innerliner film to thereby promote increases in film modulii of the individual film layers of the multilayered film.

In a preferred aspect of the invention, the increase in concentration of the dispersion is sufficient to provide a successive film modulus increase of at least one MPa for each of the film layers.

In a preferred aspect of the invention, the said dispersion is in a form of domains thereof dispersed in said thermoplastic polymer.

In practice, it is preferably envisioned that the innermost layer of said innerliner film adjacent to the tire rubber tire carcass, through the RFL coating on said film, has a film modulus in a range of form 10 to 18 MPa, the outer layer of said innerliner film has a film modulus in a range of from 13 to 24 MPa, and intermediate film layers therebetween have a film modulus increasing by at least about one (1) MPa for each successive layer extending from the aforesaid inner layer to and including the outermost film layer of the multilayered innerliner film.

In practice, the first and second rubber strips preferably comprise at least one sulfur curable diene-based elastomer comprising at least one polymer of at least one of isoprene and 1,3-butadiene and of styrene with at least one of isoprene and 1,3-butadiene, wherein said elastomer is exclusive of a copolymer of isobutylene and diene hydrocarbon. While the width of the rubber strip may extend any desirable and suitable length beyond said splice (e.g. in a circumferential direction beyond said splice), it may generally extend a distance, for example, of from 2 to 10 cm.

It is an important preferred aspect of the invention that the location of the innerliner film splice is spaced apart from any tire rubber carcass ply splice to thereby promote a better weight balance and associated integrity of the tire.

In practice, both sides of the innerliner film preferably contain a an RFL adhesive coating to provide building tack between the innerliner film and uncured tire rubber carcass and to be thereby cohesively adhered, or bonded, by the RFL adhesive to the tire rubber carcass. Such tire rubber carcass generally comprises a sulfur curable diene-based elastomer comprising at least one polymer of at least one of isoprene and of 1,3-butadiene and of styrene with at least one of isoprene and 1,3-butadiene, wherein said elastomer is preferably exclusive of a copolymer of isobutylene and diene hydrocarbon.

As indicated, the layers of the multilayered innerliner film preferably comprise a copolymer of diamine and dicarboxylic acid representative of which are at least one of nylon 6, nylon 6-6, nylon 4,6, nylon 11, nylon 12, nylon 6,10 and nylon 6,12, wherein at least one of nylon 6 and nylon 6-6 may be most desirable.
A representative of tire innerliner films, in general and not intended to be limitative, may be found, for example, in US-B-8,544,517, US-A-2013/0101821, US-A-2013/0199686 and US-A-2014/0227499.

Nylon is a generic designation for a family of synthetic thermoplastic polymers generally known as aliphatic polyamides as copolymers of a diamine and dicarboxylic acid. They are, generally, polymers composed of repeating units linked by amide bonds which are frequently referred to as being polyamides. Nylons are condensation polymers formed by reacting relatively equal parts of a diamine with a dicarboxylic acid. Amides are usually formed at both ends of each monomer. Chemical elements of the nylons include carbon, hydrogen, nitrogen and oxygen. For example, nylon 6 is reported as being a polycaprolactam having a melting point of about 220°C. Nylon 6-6 is reported as being a polymer of hexamethylenediamine (a 6 carbon diamine) and adipic acid (e.g. polyhexamethylene adipamide) having a melting point of about 265°C. Nylon 6,12 is reported as being a copolymer of a 6 carbon diamine and 12 carbon dicarboxylic acid.

In one embodiment, and as previously indicated, both sides of the multilayered innerliner film may contain an RFL adhesive coating to promote bonding of the innerliner film to the adjoining carcass ply as well as promoting bonding of the components of the innerliner film splice (e.g. the innerliner film end segments and rubber strips). Such RFL coating typically comprises a resorcinol-formaldehyde resin/styrene-butadiene vinylpyridine latex optionally containing a styrene-butadiene rubber latex, and optionally containing a blocked isocyanate.

In additional accordance with this invention, the tire is provided as a cured rubber tire (e.g. a sulfur cured rubber tire) with the multilayered innerliner splice and rubber strip reinforcement being bonded together (e.g. cohesively bonded building tack to thereby bond them together until the tire is cured) by said RFL adhesive.

In further accordance with a preferred aspect of this invention, a method of preparing a pneumatic tire containing a multilayered innerliner film on its inner surface is disclosed, wherein said innerliner film contains an RFL adhesive coating on both of its sides and is comprising from 2 through 7, alternately from 2 through 5 layers, wherein the multilayered innerliner film has a film modulus in a range of from 11 to 20 MPa, wherein the film modulus of each of the layers of the multilayered film successively increases from its innermost layer adjacent to the tire rubber carcass (through its RFL coating) to and including its outermost layer by least one MPa, wherein the concentration of said dispersion contained in said thermoplastic polyamide based polymer of the individual layers of said multilayered innerliner film is sufficiently increased for the individual film layers to provide the aforesaid successive modulus increase of at least one MPa for each of the film layers.

Said method preferably comprises: (A) applying a rubber strip (referred to herein as a second rubber strip) onto and in line with the axis of a cylindrical tire building drum, (B) applying and adhering a first end portion of the multilayered tire innerliner film, containing first and second end portions thereof, onto said second rubber strip on said tire building drum, wherein said second rubber strip extends along the width (the axial width) of the innerliner film, (C) applying a rubber strip (referred to herein as a first rubber strip) onto said first end portion of said multilayered innerliner film in line with and opposite to said second rubber strip and on an opposite side of the first end portion of the innerliner film, wherein the first rubber strip extends the width (the axial width) of the multilayered innerliner film, (D) wrapping said multilayered innerliner film in a circumferential direction around said cylindrical tire building drum to align a second end portion of the multilayered innerliner film in an overlapping relationship with said first rubber strip therebetween to form an innerliner splice, (E) building a tire carcass rubber ply in a circumferential direction around and onto said innerliner film splice with the ends of the carcass rubber ply overlapping each other to form a carcass ply splice positioned at a location spaced apart from the location of the innerliner film splice followed by building the remainder of the tire components over the carcass ply to form a pneumatic tire having an internal air cavity; wherein said first rubber strip extends in a circumferential direction beyond said innerliner splice on the surface of the multilayered innerliner film to further bond a combination of a surface of said inner end portion of the multilayered innerliner film, said innerliner film and said tire rubber carcass; wherein said second rubber strip abridges and is bonded to said outer second end portion of the multilayered innerliner film and said multilayered innerliner film adjacent to the internal air cavity of said pneumatic tire; wherein said film layers of the multilayered innerliner film comprise from 40 to 85 weight percent of a thermoplastic polyamide-based polymer or resin, which may be, for example, a copolymer of diamine and dicarboxylic acid and a range of from 15 to 60 weight percent of dispersion therein comprising at least one of: (F) a copolymer or mixture comprising a polyamide-based segment and a polyether-based segment of elastomer, and (G) a polymer comprising at least one of polyalkylene glycol (e.g. at least one of polyethyleneglycol, polypropyleneglycol and polytetramethylene glycol), polyoxyalkylene diamine (e.g. at least one of polyoxyethylene diamine, polyoxypropylene diamine and polyoxytetramethylene diamine) and copolymers thereof; and wherein the concentration of said dispersion contained in said thermoplastic polyamide based polymer of the individual layers of said multilayered innerliner film is increased by at least five (5) percent for each successive layer extending from the aforesaid inner layer to and including the outermost film layer of the multilayered innerliner film (to thereby promote increases in film modulii of the individual film layers of the multilayered film).

As previously indicated, it is envisioned that the innermost layer of said innerliner film adjacent to the tire rubber tire carcass, through the RFL coating on said film, has a film modulus in a range of form 10 to 18 MPa, the outer layer of said innerliner film has a film modulus in a range of from 13 to 24 MPa, where the intermediate film layer(s) therebetween have a film modulus increasing by at least about one MPa for each successive layer extending from the aforesaid inner layer to and including the outermost film layer of the multilayered innerliner film.

As previously indicated, representative of said copolymers of diamine and dicarboxylic acid for said film innerliner are desirably at least one of nylon 6, nylon 6-6, nylon 4,6, nylon 11, nylon 12, nylon 6,10 and nylon 6,12 wherein at least one of nylon 6 and nylon 6-6 may be desirable.

In one embodiment of said method, as previously indicated, both sides of the innerliner film are coated with an RFL adhesive coating to promote bonding (e.g. cohesive bonding building tack until the tire is cured) of the innerliner film to the adjoining rubber carcass ply and to promote bonding (e.g. cohesive bonding building tack until the tire is cured) of the components of the innerliner film splice together (e.g. the innerliner film end segments and rubber strips).

The method may further comprise curing (sulfur curing) the tire in a suitable mold at an elevated temperature (e.g. about 160°C to about 170°C) to thereby provide a cured rubber tire.

As previously indicated, the RFL adhesive is preferably a well known resorcinol-formaldehyde resin/butadiene-styrene-vinyl pyridine terpolymer latex, or a blend thereof with a butadiene/styrene rubber latex, used in the tire industry for application to fabrics, fibers and textile cords for aiding in their adherence to rubber components (for example, see US-A-4,356,219).

In one embodiment, the film is treated, namely coated, with an aqueous RFL emulsion comprising a combination or resorcinol-formaldehyde resin, and one or more indicated elastomer latexes, and the coating dried to remove water.

In one embodiment, the RFL for said coating may include the resorcinol formaldehyde resin, a styrene-butadiene copolymer latex and vinylpyridine-styrene-butadiene terpolymer latex. In a further embodiment, the RFL may also include a blocked isocyanate.

In one embodiment, the RFL adhesive composition comprises:
(A) resorcinol,
(B) formaldehyde,
(C) a styrene-butadiene rubber latex,
(D) a vinylpyridine-styrene-butadiene terpolymer latex, and, optionally,
(E) a blocked isocyanate.

The resorcinol reacts with formaldehyde to produce a resorcinol-formaldehyde reaction product. This reaction product is the result of a condensation reaction between a phenol group on the resorcinol and the aldehyde group on the formaldehyde. Resorcinol resoles and resorcinol-phenol resoles, whether formed in situ within the latex or formed separately in aqueous solution, are considerably superior to other condensation products in the adhesive mixture.

For preparation of an RFL adhesive, for example, the resorcinol may be dissolved in water to which formaldehyde has been added (for example, about 37 percent formaldehyde) together with a strong base such as sodium hydroxide. The strong base should generally constitute around 7.5 percent or less of the resorcinol, and the molar ratio of the formaldehyde to resorcinol should be in a range of from 1.5 to 2. The aqueous solution of the resole or condensation product or resin is mixed with the styrene-butadiene latex and vinylpyridine-styrene-butadiene terpolymer latex. The resole or other mentioned condensation product or materials that form said condensation product should, for example, constitute from 5 to 40 parts and more desirably about 10 to about 28 parts by weight solids of the latex mixture. The condensation product forming the resole or resole type resin forming materials should desirably be partially reacted or reacted so as to be only partially soluble in water. Sufficient water is then preferably added to give around 12 to 28 percent by weight overall solids in the final mixture. The weight ratio of the polymeric solids from the latex to the resorcinol/formaldehyde resin should, for example, be in a range of 2/1 to 6/1.

In one embodiment, the RFL adhesive may include a blocked isocyanate. For example, 1 to about 8 parts by weight of solids of a blocked isocyanate is added to the adhesive. The blocked isocyanate may be any suitable blocked isocyanate known to be used in RFL adhesive dips including, but not limited to, caprolactam blocked methylene-bis-(4-phenylisocyanate), such as Grilbond-IL6 available from EMS American Grilon, Inc., and phenol formaldehyde blocked isocyanates as disclosed in US-A-3,226,276, US-A-3,268,467 and US-A-3,298,984. As a blocked isocyanate, use may be made of reaction products between one or more isocyanates and one or more kinds of isocyanate blocking agents. The isocyanates include monoisocyanates such as phenyl isocyanate, dichlorophenyl isocyanate and naphthalene monoisocyanate, diisocyanate such as tolylene diisocyanate, dianisidine diisocyanate, hexamethylene diisocyanate, m-phenylene diisocyanate, tetramethylene diisocyante, alkylbenzene diisocyanate, m-xylene diisocyanate, cyclohexylmethane diisocyanate, 3,3-dimethoxyphenylmethane-4,4'-diisocyanate, 1-alkoxybenzene-2,4-diisocyanate, ethylene diisocyanate, propylene diisocyanate, cyclohexylene-1,2-diisocyanate, diphenylene diisocyanate, butylene-1,2-diisocyanate, diphenylmethane-4,4diisocyanate, diphenylethane diisocyanate, 1,5-naphthalene diisocyanate, etc., and triisocyanates such as triphenylmethane triisocyanate and diphenylmethane triisocyanate. The isocyanate-blocking agents include phenols such as phenol, cresol, and resorcinol, tertiary alcohols such as t-butanol and t-pentanol, aromatic amines such as diphenylamine, diphenylnaphthylamine and xylidine, ethyleneimines such as ethylene imine and propyleneimine, imides such as succinic acid imide, and phthalimide, lactams such as epsilon-caprolactam, delta-valerolactam, and butyrolactam, ureas such as urea and diethylene urea, oximes such as acetoxime, cyclohexanoxime, benzophenon oxime, and alpha-pyrolidon.

The polymers of the RFL adhesive composition may be applied in a form of an aqueous latex or otherwise, usually in a form of a latex. In one embodiment, for example, a vinylpyridine-styrene-butadiene terpolymer latex and styrene-butadiene rubber latex may be added to the RFL adhesive composition. The vinylpyridine-styrene-butadiene terpolymer may be present in the RFL adhesive such that the solids weight of the vinylpyridine-styrene-butadiene terpolymer is from 50 percent to 100 percent of the solids weight of the styrene-butadiene rubber; in other words, the weight ratio of vinylpyridine-styrene-butadiene terpolymer to styrene-butadiene rubber is from 1/1 to 2/1.

In further accordance with this invention, said tire assembly is provided as a sulfur vulcanized composite and thereby a cured rubber tire. Such vulcanization may be conducted, for example, under conditions of elevated temperature and pressure as would be well known to those having skill in such art of rubber vulcanization.

Representative of sulfur vulcanizable elastomers of said tire carcass to which said RFL adhesive is in contact may comprise, for example, cis 1,4-polyisoprene, cis 1,4-polybutdiene and styrene/butadiene copolymer rubbers.

### Brief Description of the Drawings

The Figures contained in the accompanying drawings are presented to illustrate a tire with several embodiments of a multilayered innerliner film covering a tire carcass's inner surface in a circumferential direction, wherein the innerliner film has its two end portions overlapping each other to form a splice with a rubber strip therebetween.
FIG 1 illustrates a cross-sectional view of a pneumatic tire containing the multilayered innerliner film.
FIG 2 is a prospective view of the tire illustrating a circumferential sheet of spliced multilayered innerliner film with a rubber strip between the ends of the innerliner film.
FIG 3 is an enlarged cross sectional view taken long lines A-A of FIG 2 illustrating the spliced multilayered innerliner film.
FIG 3A is an enlarged cross sectional view taken from a portion of FIG 3.
FIG 3B is an enlarged cross sectional view taken from a portion of FIG 3.
FIG 4 is provided to show end portions of a carcass overlapped in a region spaced apart from the multilayered innerliner film splice, all of which is presented as being over a building drum.
FIG 5A illustrates an initial step of application of the multilayered innerliner film which includes positioning a first rubber strip on a building drum to which an end portion of the innerliner film is adhered.
FIG 5B illustrates application of a second rubber strip over an end portion of the multilayered innerliner film on the building drum with the second rubber strip between the end portions of the innerliner film to form a splice.
FIG 5C is an enlarged view of an end portion of FIG 5B showing the splice.
FIG 6A is provided to illustrate building of the cord reinforced rubber carcass ply on the building drum over the spliced innerliner film.
FIG 6B is provided, together with FIG 6A to illustrate overlapped carcass ply portions to form a splice which is spaced apart from the innerliner film splice.
FIG 6C is an expanded view of the region 6B of FIG 6B showing the carcass ply splice as being spaced apart from the innerliner film splice.

### The Drawings and Example Embodiments of the Invention

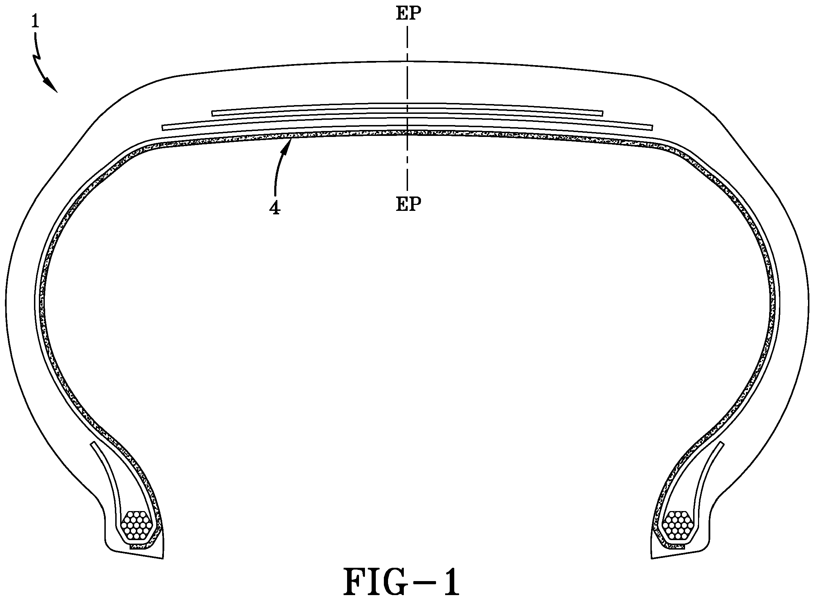

FIG 1 illustrates a cross-sectional view of a pneumatic tire 1 containing a multilayered innerliner film 4. The indicated "EP" represents a center line of the tire 1. The multilayered film 4 is composed of three film layers in this example.

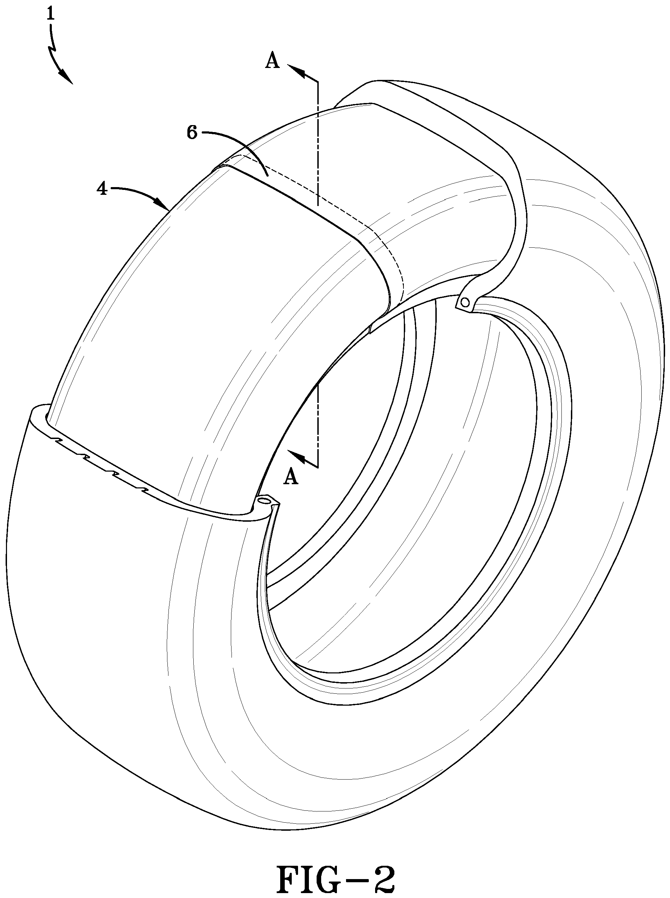

FIG 2 is a perspective view of the tire 1 illustrating a circumferential sheet of the innerliner film 4 having its end portions overlapped to form a splice 6. The ends of the innerliner film 4 became spliced upon being wrapped around a cylindrical tire building drum with a rubber strip therebetween.

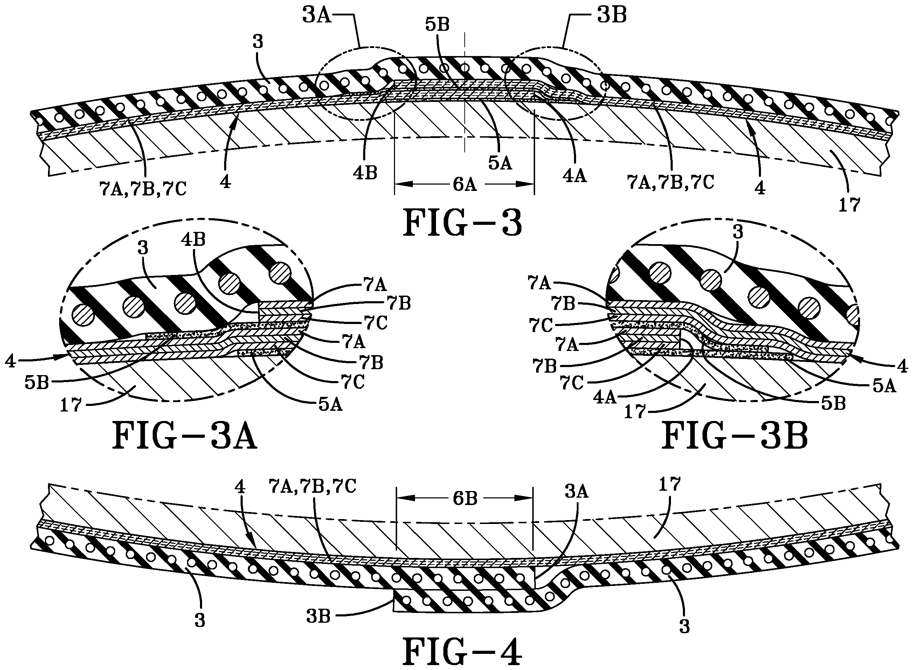

FIG 3 is an enlarged cross sectional view taken along lines A-A of FIG 2 to further illustrate the splice of the circumferential innerliner film 4 with its inner end portion 4B and outer end portion 4A overlapping each other in the splice region 6A with a first rubber strip 5B therebetween. The tire rubber carcass layer 3 is illustrated as being built over the innerliner film 4 with its carcass splice (not shown) spaced away from the location of the innerliner film splice. The innerliner film splice (region 6A) also includes a second rubber strip 5A adhered to the innerliner film 4 and abridging an end of the innerliner film 4 and the rubber strip 5B. In practice, for the preparation of the spliced innerliner film 4 in a form of a sheet is wrapped in a circumferential direction around a tire building drum 17 which contains a release coating (not shown) to enable a release of the built tire containing the spliced innerliner film 4 to include the second rubber strip 5A adjacent to the surface of the building drum 17. The innerliner film 4 is composed of three layers 7A, 7B and 7C in the example shown.

FIG 3A is an enlarged cross sectional view taken from a portion of FIG 3, namely the portion identified as 3A, with the overlapping inner end portion 4B and outer end portion 4A of innerliner film 4 with the first rubber strip 5B therebetween and the underlying second rubber strip 5A.

In particular, the first rubber strip 5B is shown as extending in a circumferential direction beyond the inner end portion 4B of the innerliner film 4 to thereby aid in promoting bonding of the innerliner film 4 to the tire carcass ply 3.

FIG 3B is an enlarged cross sectional view taken from a portion of FIG 3, namely the portion identified as 3B, with the outer end portion 4A and innerliner film 4 with the first rubber strip 5B therebetween and the underlying second rubber strip 5A.

In particular, both the first rubber strip 5B and second rubber strip 5A are shown as extending in a circumferential direction beyond the inner end portion 4A of the innerliner film 4 to thereby aid in promoting bonding of inner end portion 4A the innerliner film 4.

FIG 4 is provided to simply show the end portions 3A and 3B of the carcass ply 3 overlapping and stitched (pressed) together in region 6B over a non-spliced portion of the innerliner film 4, all over the building drum 17 and therefore spaced apart from the innerliner film splice.

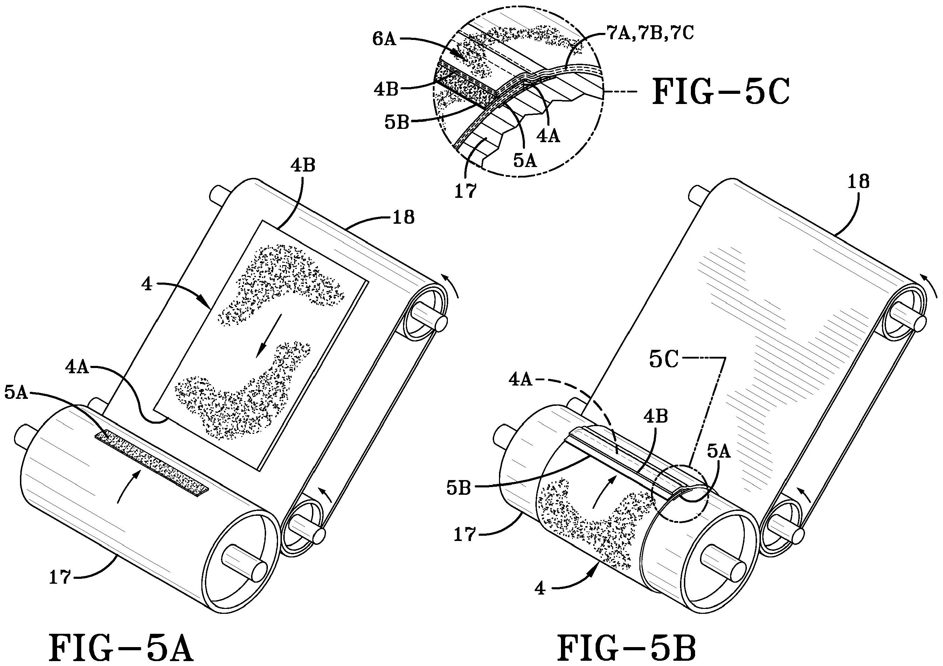

FIG 5A illustrates an initial step of preparation of the innerliner comprised of feeding a sheet of multilayered innerliner film 4 which is fed to a tire building drum 17 from a conveyor belt 18. A second rubber strip 5A is applied to the building drum 17 after which the sheet of innerliner film 4 is wrapped in a circumferential direction around the building drum 17 to adhere its end portion 4A to the second rubber strip 5A.

In FIGs 3, 3A and 3B, the innerliner film 4 is illustrated as being composed of three layers, namely, an inner layer 7A adjacent and adhered to the tire carcass, an outer layer 7C and an intermediate layer 7B.

FIG 5B illustrates a first rubber strip 5B applied over the opposite side of end section 4A of the innerliner strip 4 from the second rubber strip 5A over which is applied the end portion 4B of the innerliner film 4 to thereby create a splice composed of the end portions 4A and 4B of the innerliner film 4 with the first rubber strip 5B therebetween.

FIG 5C is an enlarged view of an end portion of FIG 5B illustrating the splice composed of the overlapping end portions 4A and 4B of the innerliner film 4 with the first rubber strip 5B therebetween together with the second rubber strip 5A releasably positioned on the release coated building drum 17 to fasten (bond) the associated end portion 4A of the innerliner film 4.

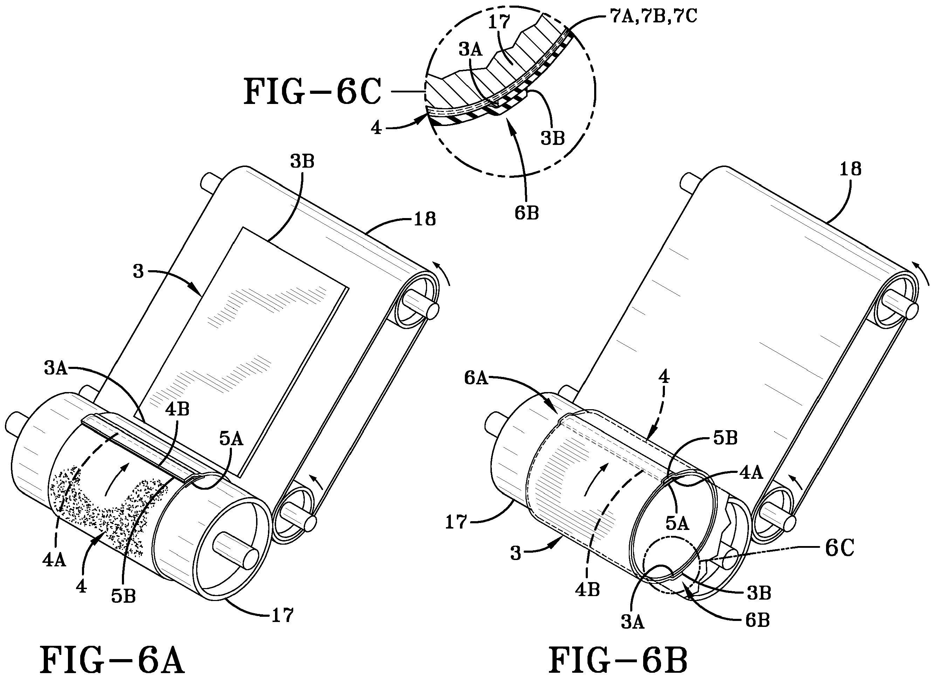

FIG 6A is provided to illustrate building of the cord reinforced rubber carcass ply 3 as it being fed from a conveyor belt 18 onto a building drum 17 and wrapped in a circumferential direction around and over spliced innerliner film 4 with its overlaying end portions 4A and 4B and associated second and first rubber strips 5A and 5B on the building drum 17.

In FIG 6B, taken with FIG 6A, the carcass end portions 3A and 3B of the carcass ply 3 are shown as being overlapped and stitched (pressed) together to from a splice which is spaced apart from, and therefore at a different location than, the splice of the innerliner film 4.

FIG 6C is an expanded view of region 6B of FIG 6B showing the carcass ply splice comprising overlapped carcass end portions 3A and 3B of the carcass ply 3 with the carcass ply splice positioned over the innerliner film which is spaced apart from the innerliner splice.

In one embodiment, both sides of the thin innerliner film 4 contain an RFL coating (not shown) to promote bonding (e.g. cohesive bonding building tack until the tire is cured) of the innerliner film 4 to the adjoining tire rubber carcass ply 3 and to promote bonding (e.g. cohesive bonding building tack until the tire is cured) of the components of the innerliner film splice (e.g. the innerliner film end segments 4A and 4B and rubber strips 5A and 5B). The multilayered innerliner film for this drawing is illustrated as comprising three film layers, namely the aforesaid 7A, 7B and 7C.

The concentration of said dispersion contained in said thermoplastic polyamide based polymer of the individual layers of said multilayered innerliner film is increased by at least five (5) percent for each successive layer extending from the aforesaid inner layer 7A to and including the outermost film layer 7C of the multilayered innerliner film (to thereby promote increases in film Modulii of the individual film layers of the multilayered film).

The multilayered innerliner film is envisioned as having an overall film modulus in a range of from 10 to 20 MPa.

The film modulus of each of the layers of the multilayered film successively increases from its innermost layer 7A adjacent to the tire rubber carcass (through its RFL coating) to and including its outermost layer 7C by least one MPa.

In one embodiment, it is envisioned that the innermost layer 7A of the innerliner film adjacent to the tire rubber tire carcass, through the RFL coating on said film, has a film modulus in a range of form 10 to 18 MPa, the outer layer 7C of said innerliner film has a film modulus in a range of from 13 to 24 MPa, and the intermediate film layer 7B therebetween has a film modulus of at least one MPa greater than the innermost film layer 7A and the outermost film layer 7C has a film modulus at least one MPa greater than the intermediate film layer 7B.

The film layers of the multilayered innerliner film 4 for these drawings preferably comprise a thermoplastic polyamide-based polymer as a copolymer of diamine and dicarboxylic acid, namely at least one of nylon 6 (a caprolactam) and nylon 6-6 (copolymer of hexamethyl and adipic acid containing a dispersion therein comprised of domains of copolymers comprised of a polyamide-based segment and a polyether-based segment, wherein the said dispersion contained in said thermoplastic polyamide based polymer of the individual layers of said multilayered innerliner film is individually increased by at least five (5) percent.

The RFL adhesive coating (not shown) for these drawings preferably comprise a resorcinol-formaldehyde resin/styrene-butadiene vinylpyridine latex optionally containing a styrene-butadiene rubber latex and/or blocked isocyanate, wherein the first and second rubber strips, or layers, 5A and 5B are rubber strips comprised of at least one sulfur curable diene-based elastomer.

In additional accordance with the invention, the tire is further provided as a cured tire having been cured in a suitable mold at an elevated temperature.

The thin polymeric innerliner film 4 for the barrier layer preferably has a film thickness, for example, of from 25 to 200 microns. Alternately the thickness of the thin film may range from 50 microns to 150 microns.

The thin innerliner film for the barrier layer preferably has an oxygen permeabilityof less than 20 x 10⁻¹² cc-cm/cm²·sec·cmHg.

Desirably, the polymeric innerliner film has an elongation, for example, of at least 200 percent at about 23°C. As such, it is intended that, when used as the innerliner layer of the tire, the polymeric film is not intended to break during the tire shaping process.

The rubber compositions for the rubber tire carcass layer (ply) and the rubber layer first and second rubber strips can contain conventional rubber tire additives to provide a desired rubber property as would be applied by one having skill in the appropriate art. Such known and commonly used additive materials may include, for example, sulfur cure activators, retarders and accelerators, rubber processing oils, resins including tackifying resins, plasticizers, fatty acids, zinc oxide, waxes, antidegradant, antiozonants and peptizing agents.

The uncured tire assembly can be molded and sulfur cured in a suitable tire mold at an elevated temperature and pressure conditions as would be appreciated and known to those having skill in such art.

It is concluded that application of the uncured, sulfur curable, first and second rubber strips provide significant reinforcement of the splice to respond to stress caused by expansion of the uncured tire during its building.

## Claims

1. A pneumatic tire having an innerliner comprising a multilayered innerliner film (4) covering at least a portion of the tire carcass's inner surface in a circumferential direction,
wherein the multilayered innerliner film (4) contains an RFL adhesive coating on both of its sides and comprises from 2 to 7 layers (7A, 7B, 7C),
wherein the multilayered innerliner film (4) has a Young's modulus in a range of from 11 to 20 MPa,
wherein the Young's modulus of each of the layers (7A, 7B, 7C) of the multilayered innerliner film (4) successively increases from its innermost layer (7A) adjacent to the tire carcass layer (3), preferably through its RFL coating, to and including its outermost layer (7C) by at least one MPa, and wherein the multilayered innerliner film (4) has its two end portions overlapping each other to form a splice (6) comprising an inner first end portion (4B) adjacent to the tire carcass layer (3) and an outer second end portion (4A) adjacent to the internal air cavity of the pneumatic tire (1).

2. The pneumatic tire of claim 1 wherein the innerliner film splice (6) comprises:
(A) the overlapping inner first and outer second end portions (4B, 4A) of said innerliner film (4) bonded through a first rubber strip (5B) positioned therebetween, wherein said first rubber strip (5B) extends circumferentially beyond said splice (6) on the inner surface of the innerliner film (4) to further bond a combination of a surface of said inner end portion (4B) of the innerliner film (4), said inner surface of the innerliner film (6) and said tire rubber carcass layer (3), and
(B) a second rubber strip (5A) abridging and bonded to a surface of said outer second end portion (4A) of the innerliner film (4) and an outer surface of said innerliner film (6) adjacent to the internal air cavity of said pneumatic tire (1).

3. The pneumatic tire of claim 1 or 2 wherein the layers of said innerliner film (4) comprises:
(1) from 40 to 85 weight percent of a thermoplastic polyamide-based polymer or resin, which may preferably comprises a copolymer of a diamine and dicarboxylic acid, and
(2) from 15 to 60 weight percent of a dispersion contained in said thermoplastic polyamide-based polymer or resin comprising:
(a) a copolymer or mixture comprising a polyamide-based segment and a polyether-based segment, and
(b) a polymer comprising at least one of polyalkylene glycol, preferably at least one of polyethyleneglycol, polypropyleneglycol and polytetramethylene glycol, polyoxyalkylene diamine, preferably at least one of polyoxyethylene diamine, polyoxypropylene diamine and polyoxytetramethylene diamine, and copolymers thereof.

4. The pneumatic tire of claim 3 wherein the concentration of said dispersion contained in said thermoplastic polyamide based polymer or resin of the individual layers (7A, 7B, 7C) of said multilayered innerliner film (4) increases by at least five percent for each successive layer extending from the aforesaid innermost layer (7A) to and including the outermost layer (7C) of the multilayered innerliner film (4).

5. The tire of at least one of the previous claims wherein the said dispersion contained in the thermoplastic polymer or resin is in a form of domains thereof dispersed in said thermoplastic polyamide-based polymer.

6. The tire of at least one of the previous claims wherein the innermost layer (7C) of said innerliner film (4) adjacent to the tire carcass layer (3), through the RFL coating on said film (4), has a Young's modulus in a range of from 10 to 18 MPa, the outermost layer (7C) of said innerliner film (4) has a Young's modulus in a range of from 13 to 24 MPa, and intermediate film layers (7B) therebetween have a Young's modulus increasing by at least one MPa for each successive layer extending from the aforesaid innermost layer (7A) to and including the outermost layer (7C) of the multilayered innerliner film (4).

7. The tire of at least one of the previous claims 2 to 6 wherein
(i) the first and the second rubber strips (5A, 5B) comprise at least one sulfur curable diene-based elastomer comprising at least one polymer of at least one of isoprene and 1,3-butadiene and of styrene with at least one of isoprene and 1,3-butadiene, wherein said elastomer is exclusive of a copolymer of isobutylene and diene hydrocarbon; and/or wherein
(ii) wherein tire carcass layer (3) comprises a sulfur curable diene-based elastomer comprising at least one polymer of at least one of isoprene and of 1,3-butadiene and of styrene with at least one of isoprene and 1,3-butadiene, exclusive of a copolymer of isobutylene and diene hydrocarbon.

8. The tire of at least one of the previous claims wherein the location of the splice (6) is spaced apart from any tire carcass ply splice.

9. The tire of at least one of the previous claims 3 to 8 wherein the thermoplastic polyamide-based polymer of the innerliner film (4) is a copolymer of diamine and dicarboxylic acid comprising at least one of nylon 6, nylon 6-6, nylon 4,6, nylon 11, nylon 12, nylon 6,10 and nylon 6,12; or wherein the thermoplastic polyamide-based polymer of the innerliner film (4) comprises at least one of polycaprolactam (or nylon 6) and copolymer of hexamethylenediame and adipic acid (or nylon 6-6) and said dispersed copolymer comprises a polyamide segment and a polyether-based segment.

10. The tire of at least one of the previous claims wherein said RFL adhesive comprises a resorcinol-formaldehyde resin/styrene-butadiene vinylpyridine latex optionally containing a styrene-butadiene rubber latex, and optionally containing a blocked isocyanate.

11. A method of preparing a pneumatic tire containing a multilayered innerliner film (4) on its inner surface, wherein said innerliner film (4) contains an RFL adhesive coating on both of its sides and comprise from 2 through 7 layers (7A, 7B, 7C), wherein the method comprises:
(A) applying a second rubber strip (5A) onto and in line with the axis of a cylindrical tire building drum (17);
(B) applying and adhering a first end portion of the multilayered tire innerliner film (4), containing first and second end portions thereof, onto said second rubber strip (5A) on said tire building drum (17), wherein said second rubber strip (5A) extends along the axial width of the innerliner film (4);
(C) applying a first rubber strip (5B) onto said first end portion of said multilayered innerliner film (4) in line with and opposite to said second rubber strip (5A) and on an opposite side of the first end portion of the innerliner film (4), wherein the first rubber strip (5B) extends along the axial width of the multilayered innerliner film (4);
(D) wrapping said multilayered innerliner film (4) in a circumferential direction around said cylindrical tire building drum (17) to align a second end portion of the multilayered innerliner film (4) in an overlapping relationship with said first rubber strip (5B) therebetween to form an innerliner splice (6);
(E) building a carcass ply layer (3) in a circumferential direction around and onto said innerliner film splice (6) with the ends of the carcass ply layer (3) overlapping each other to form a carcass ply layer splice positioned at a location spaced apart from the location of the innerliner film splice (6) followed by building the remainder of the tire components over the carcass ply layer (3) to form a pneumatic tire (1) having an internal air cavity;
wherein said first rubber strip (5B) extends in a circumferential direction beyond said innerliner splice (6) on the surface of the multilayered innerliner film (4) to further bond a combination of a surface of said inner end portion of the multilayered innerliner film (4), said innerliner film (4) and said carcass ply layer (3); and
wherein said second rubber strip (5A) abridges and is bonded to said outer second end portion of the multilayered innerliner film (4) and said multilayered innerliner film (4) adjacent to the internal air cavity of said pneumatic tire (1).

12. The method of claim 11 wherein said film layers (7A, 7B, 7C) of the multilayered innerliner film (4) comprise from 40 to 85 weight percent of a thermoplastic polyamide-based polymer or resin, preferably a copolymer of diamine and dicarboxylic acid, and from 15 to 60 weight percent of a dispersion therein comprising at least one of:
(F) a copolymer or mixture comprising a polyamide-based segment and a polyether-based segment of elastomer; and
(G) a polymer comprising at least one of polyalkylene glycol, preferably at least one of polyethyleneglycol, polypropyleneglycol and polytetramethylene glycol, polyoxyalkylene diamine, preferably at least one of polyoxyethylene diamine, polyoxypropylene diamine and polyoxytetramethylene diamine, and copolymers thereof.

13. The method of claim 12 wherein the concentration of said dispersion contained in said thermoplastic polyamide based polymer of the individual layers (7A, 7B, 7C) of said multilayered innerliner film (4) increases by at least five (5) percent for each successive layer extending from the aforesaid inner layer (7A) to and including the outermost film layer (7C) of the multilayered innerliner film (4).

14. The method of at least one of the claims 11 to 13 wherein the innermost layer (7A) of said innerliner film (4) adjacent to the carcass ply layer (3), through the RFL coating on said film (4), has a Young's modulus in a range of form 10 to 18 MPa, the outer layer (7C) of said innerliner film (4) has a Young's modulus in a range of from 13 to 24 MPa, and intermediate film layers (7B) therebetween have a Young's modulus increasing by at least about one MPa for each successive layer extending from the aforesaid inner layer (7A) to and including the outermost film layer (7C) of the multilayered innerliner film (4).

15. The method of at least one of the claims 11 to 14 wherein the method further comprises curing the tire (1) in a mold at an elevated temperature.

## Patentansprüche

1. Luftreifen mit einer Innenisolierung, umfassend einen mehrschichtigen Innenisolierungsfilm (4), der mindestens einen Teil der Innenfläche der Reifenkarkasse in einer Umfangsrichtung bedeckt,
wobei der mehrschichtige Innenisolierungsfilm (4) an seinen beiden Seiten eine RFL-Klebstoffbeschichtung enthält und 2 bis 7 Schichten (7A, 7B, 7C) umfasst,
wobei der mehrschichtige Innenisolierungsfilm (4) einen Elastizitätsmodul im Bereich von 11 bis 20 MPa hat,
wobei der Elastizitätsmodul jeder der Schichten (7A, 7B, 7C) des mehrschichtigen Innenisolierungsfilms (4) von seiner innersten Schicht (7A) benachbart zu der Reifenkarkassenschicht (3), bevorzugt durch seine RLF-Beschichtung, bis zu und einschließlich seiner äußersten Schicht (7C) aufeinanderfolgend um mindestens ein MPa ansteigt, und
wobei die zwei Endteile des mehrschichtigen Innenisolierungsfilms (4) einander überlappen, sodass sie einen Spleiß (6) bilden, der einen inneren ersten Endteil (4B) benachbart zu der Reifenkarkassenschicht (3) und einen äußeren zweiten Endteil (4A) benachbart zu dem inneren Lufthohlraum des Luftreifens (1) umfasst.

2. Luftreifen nach Anspruch 1, wobei der Innenisolierungsfilmspleiß (6) umfasst:
(A) den einander überlappenden inneren ersten und äußeren zweiten Endteil (4B, 4A) des Innenisolierungsfilms (4), die durch einen dazwischen angeordneten ersten Kautschukstreifen (5B) verbunden sind, wobei der erste Kautschukstreifen (5B) sich in Umfangsrichtung über den Spleiß (6) an der Innenfläche des Innenisolierungsfilms (4) hinaus erstreckt, um weiter eine Kombination einer Oberfläche des inneren Endteils (4B) des Innenisolierungsfilms (4), der Innenfläche des Innenisolierungsfilms (6) und der Reifen-Kautschukkarkassenschicht (3) zu verbinden, und
(B) einen zweiten Kautschukstreifen (5A), der eine Oberfläche des äußeren zweiten Endteils (4A) des Innenisolierungsfilms (4) und eine Außenfläche des Innenisolierungsfilms (6) benachbart zu dem inneren Lufthohlraum des Luftreifens (1) verkürzt und damit verbunden ist.

3. Luftreifen nach Anspruch 1 oder 2, wobei die Schichten des Innenisolierungsfilms (4) umfassen:
(1) 40 bis 85 Gewichtsprozent eines auf thermoplastischem Polyamid basierten Polymers oder Harzes, das bevorzugt ein Copolymer eines Diamins und Dicarbonsäure umfassen kann, und
(2) 15 bis 60 Gewichtsprozent einer in dem auf thermoplastischem Polyamid basierten Polymer oder Harz enthaltenen Dispersion, umfassend:
(a) ein Copolymer oder Gemisch, umfassend einen Polyamidbasierten Anteil und einen Polyether-basierten Anteil, und
(b) ein Polymer, umfassend mindestens eines von Polyalkylenglykol, bevorzugt mindestens eines von Polyethylenglykol, Polypropylenglykol und Polytetramethylenglykol, Polyoxyalkylendiamin, bevorzugt mindestens eines von Polyoxyethylendiamin, Polyoxypropylendiamin und Polyoxytetramethylendiamin, und Copolymere davon.

4. Luftreifen nach Anspruch 3, wobei die Konzentration der in dem auf thermoplastischem Polyamid basierten Polymer oder Harz der einzelnen Schichten (7A, 7B, 7C) des mehrschichtigen Innenisolierungsfilms (4) enthaltenen Dispersion für jede nachfolgende Schicht, die sich von der vorgenannten innersten Schicht (7A) bis zu und einschließlich der äußersten Schicht (7C) des mehrschichtigen Innenisolierungsfilms (4) erstreckt, um mindestens fünf Prozent ansteigt.

5. Reifen nach mindestens einem der vorhergehenden Ansprüche, wobei die in dem thermoplastischen Polymer oder Harz enthaltene Dispersion in einer Form von in dem thermoplastischen Polyamid basierten Polymer dispergierten Domänen davon vorliegt.

6. Reifen nach mindestens einem der vorhergehenden Ansprüche, wobei die innerste Schicht (7C) des Innenisolierungsfilms (4) benachbart zu der Reifenkarkassenschicht (3), durch die RFL-Beschichtung auf dem Film (4), einen Elastizitätsmodul im Bereich von 10 bis 18 MPa aufweist, die äußerste Schicht (7C) des Innenisolierungsfilms (4) einen Elastizitätsmodul im Bereich von 13 bis 24 MPa aufweist, und dazwischen befindliche Film-Zwischenschichten (7B) einen Elastizitätsmodul aufweisen, der für jede nachfolgende Schicht, die sich von der vorgenannten innersten Schicht (7A) zu und einschließlich der äußersten Schicht (7C) des mehrschichtigen Innenisolierungsfilms (4) erstreckt, um mindestens ein MPa ansteigt.

7. Reifen nach mindestens einem der vorhergehenden Ansprüche 2 bis 6, wobei
(i) der erste und der zweite Kautschukstreifen (5A, 5B) mindestens ein schwefelvulkanisierbares dienbasiertes Elastomer umfassen, das mindestens ein Polymer von mindestens einem von Isopren und 1,3-Butadien und von Styrol mit mindestens einem von Isopren und 1,3-Butadien umfasst, wobei das Elastomer unter Ausschluss eines Copolymers von Isobutylen und Dienkohlenwasserstoff ist; und/oder wobei
(ii) wobei die Reifenkarkassenschicht (3) ein schwefelvulkanisierbares dienbasiertes Elastomer umfasst, das mindestens ein Polymer von mindestens einem von Isopren und von 1,3-Butadien und von Styrol mit mindestens einem von Isopren und 1,3-Butadien umfasst, unter Ausschluss eines Copolymers von Isobutylen und Dienkohlenwasserstoff.

8. Reifen nach mindestens einem der vorhergehenden Ansprüche, wobei der Standort des Spleißes (6) von gleich welchem Reifenkarkassenlagenspleiß beabstandet ist.

9. Reifen nach mindestens einem der vorhergehenden Ansprüche 3 bis 8, wobei das auf thermoplastischem Polyamid basierte Polymer des Innenisolierungsfilms (4) ein Copolymer von Diamin und Dicarbonsäure ist, umfassend mindestens eines von Nylon 6, Nylon 6-6, Nylon 4,6, Nylon 11, Nylon 12, Nylon 6,10 und Nylon 6,12; oder wobei das auf thermoplastischem Polyamid basierte Polymer des Innenisolierungsfilms (4) mindestens eines von Polycaprolactam (oder Nylon 6) und Copolymer von Hexamethylendiamin und Adipinsäure (oder Nylon 6-6) umfasst und das dispergierte Copolymer einen Polyamidanteil und einen Polyether-basierten Anteil umfasst.

10. Reifen nach mindestens einem der vorhergehenden Ansprüche, wobei der RFL-Klebstoff einen Resorcinol-Formaldehydharz/Styrol-Butadien-Vinylpyridin-Latex umfasst, der optional einen Styrol-Butadien-Kautschuklatex enthält und optional ein blockiertes Isocyanat enthält.

11. Verfahren zur Herstellung eines Luftreifens, der einen mehrschichtigen Innenisolierungsfilm (4) an seiner Innenfläche enthält, wobei der Innenisolierungsfilm (4) an seinen beiden Seiten eine RFL-Klebstoffbeschichtung enthält und 2 bis einschließlich 7 Schichten (7A, 7B, 7C) umfasst, wobei das Verfahren umfasst:
(A) Anbringen eines zweiten Kautschukstreifens (5A) auf einer zylindrischen Reifenbautrommel (17) und auf einer Linie mit deren Achse;
(B) Anbringen und Anheften eines ersten Endteils des mehrschichtigen Reifeninnenisolierungsfilms (4), der einen ersten und einen zweiten Endteil davon enthält, auf den zweiten Kautschukstreifen (5A) auf der Reifenbautrommel (17), wobei der zweite Kautschukstreifen (5A) sich entlang der axialen Breite des Innenisolierungsfilms (4) erstreckt;
(C) Anbringen eines ersten Kautschukstreifens (5B) auf dem ersten Endteil des mehrschichtigen Innenisolierungsfilms (4) auf einer Linie mit und entgegengesetzt zu dem zweiten Kautschukstreifen (5A) und an einer entgegengesetzten Seite des ersten Endteils des Innenisolierungsfilms (4), wobei der erste Kautschukstreifen (5B) sich entlang der axialen Breite des mehrschichtigen Innenisolierungsfilms (4) erstreckt;
(D) Wickeln des mehrschichtigen Innenisolierungsfilms (4) in einer Umfangsrichtung um die zylindrische Reifenbautrommel (17), um einen zweiten Endteil des mehrschichtigen Innenisolierungsfilms (4) in einer überlappenden Beziehung mit dem ersten Kautschukstreifen (5B) dazwischen auszurichten, um einen Innenisolierungsspleiß (6) zu bilden;
(E) Bauen einer Karkassenlagenschicht (3) in einer Umfangsrichtung um und auf den Innenisolierungsfilmspleiß (6), wobei die Enden der Karkassenlagenschicht (3) einander überlappen, um einen Karkassenlagenschichtspleiß zu bilden, der an einem von dem Standort des Innenisolierungsfilmspleißes (6) beabstandeten Standort angeordnet ist, gefolgt vom Aufbauen des restlichen Reifenbauteile über der Karkassenlagenschicht (3), um einen Luftreifen (1) mit einem inneren Lufthohlraum zu bilden;
wobei der erste Kautschukstreifen (5B) sich in einer Umfangsrichtung über den Innenisolierungsspleiß (6) auf der Oberfläche des mehrschichtigen Innenisolierungsfilms (4) hinaus erstreckt, um eine Kombination einer Oberfläche des inneren Endteils des mehrschichtigen Innenisolierungsfilms (4), des Innenisolierungsfilms (4) und der Karkassenlagenschicht (3) weiter zu verbinden; und
wobei der zweite Kautschukstreifen (5A) den äußeren zweiten Endteil des mehrschichtigen Innenisolierungsfilms (4) und den mehrschichtigen Innenisolierungsfilm (4) benachbart zu dem inneren Lufthohlraum des Luftreifens (1) verkürzt und damit verbunden ist.

12. Verfahren nach Anspruch 11, wobei die Filmschichten (7A, 7B, 7C) des mehrschichtigen Innenisolierungsfilms (4) 40 bis 85 Gewichtsprozent eines auf thermoplastischem Polyamid basierten Polymers oder Harzes, bevorzugt eines Copolymers von Diamin und Dicarbonsäure, und 15 bis 60 Gewichtsprozent einer darin enthaltenen Dispersion umfassen, wobei letztere mindestens eines umfasst von:
(F) einem Copolymer oder Gemisch, umfassend einen Polyamidbasierten Anteil und einen Polyether-basierten Anteil von Elastomer; und
(G) einem Polymer, umfassend mindestens eines von Polyalkylenglykol, bevorzugt mindestens eines von Polyethylenglykol, Polypropylenglykol und Polytetramethylenglykol, Polyoxyalkylendiamin, bevorzugt mindestens eines von Polyoxyethylendiamin, Polyoxypropylendiamin und Polyoxytetramethylendiamin, und Copolymere davon.

13. Verfahren nach Anspruch 12, wobei die Konzentration der in dem auf thermoplastischem Polyamid basierten Polymer der einzelnen Schichten (7A, 7B, 7C) des mehrschichtigen Innenisolierungsfilms (4) enthaltenen Dispersion für jede nachfolgende Schicht, die sich von der vorgenannten inneren Schicht (7A) bis zu und einschließlich der äußersten Filmschicht (7C) des mehrschichtigen Innenisolierungsfilms (4) erstreckt, um mindestens fünf (5) Prozent ansteigt.

14. Verfahren nach mindestens einem der Ansprüche 11 bis 13, wobei die innerste Lage (7A) des Innenisolierungsfilms (4) benachbart zu der Karkassenlagenschicht (3), durch die RFL-Beschichtung auf dem Film (4), einen Elastizitätsmodul im Bereich von 10 bis 18 MPa aufweist, die äußere Schicht (7C) des Innenisolierungsfilms (4) einen Elastizitätsmodul im Bereich von 13 bis 24 MPa aufweist, und dazwischen befindliche Film-Zwischenschichten (7B) einen Elastizitätsmodul aufweisen, der für jede nachfolgende Schicht, die sich von der vorgenannten inneren Schicht (7A) zu und einschließlich der äußersten Filmschicht (7C) des mehrschichtigen Innenisolierungsfilms (4) erstreckt, um mindestens ein MPa ansteigt.

15. Verfahren nach mindestens einem der Ansprüche 11 bis 14, wobei das Verfahren weiter das Vulkanisieren des Reifens (1) in einer Heizform (1) auf einer erhöhten Temperatur umfasst.

## Revendications

1. Bandage pneumatique possédant un calandrage intérieur comprenant un film multicouche de calandrage intérieur (4) recouvrant au moins une portion de la surface interne de la carcasse du bandage pneumatique dans une direction circonférentielle ;
dans lequel le film multicouche de calandrage intérieur (4) contient un revêtement adhésif RFL sur ses deux côtés et comprenant de 2 à 7 couches (7A, 7B, 7C) ;
dans lequel le film multicouche de calandrage intérieur (4) possède un module de Young dans une plage de 11 à 20 MPa ;
dans lequel le module de Young de chacune des couches (7A, 7B, 7C) du film multicouche de calandrage intérieur (4) augmente de manière progressive à partir de la couche la plus interne (7A) de ce dernier en position adjacente à la couche de carcasse de bandage pneumatique (3), de préférence à travers son revêtement RFL, jusqu'à et y compris sa couche la plus externe (7C) à concurrence d'au moins un MPa ; et
dans lequel le film multicouche de calandrage intérieur (4) possède deux portions terminales qui se chevauchent l'une l'autre pour former une épissure (6) comprenant une première portion terminale interne (4B) adjacente à la couche de carcasse de bandage pneumatique (3) et une seconde portion terminale externe (4A) adjacente à la cavité interne pour l'air du bandage pneumatique (1).

2. Bandage pneumatique selon la revendication 1, dans lequel l'épissure (6) du film de calandrage intérieur comprend :
(A) le chevauchement des première portion terminale interne et seconde portion terminale externe (4B, 4A) dudit film de calandrage intérieur (4) liées via une première bande de caoutchouc (5B) disposée entre les deux, dans lequel ladite première bande de caoutchouc (5B) s'étend en direction circonférentielle au-delà de ladite épissure (6) sur la surface interne du film de calandrage intérieur (4) pour lier en outre une combinaison d'une surface de ladite portion terminale interne (4B) du film de calandrage intérieur (4), de ladite surface interne du film de calandrage intérieur (6) et de ladite couche de caoutchouc de carcasse de bandage pneumatique (3) ; et
(B) une seconde bande de caoutchouc (5A) qui surplombe une surface de ladite seconde portion terminale externe (4A) du film de calandrage intérieur (4) et une surface externe dudit film de calandrage intérieur (6) adjacente à la cavité interne pour l'air dudit bandage pneumatique (1) et qui est liée auxdites surfaces.

3. Bandage pneumatique selon la revendication 1 ou 2, dans lequel les couches dudit film de calandrage intérieur (4) comprennent :
(1) de 40 à 85 % en poids d'une résine ou d'un polymère thermoplastique à base de polyamide qui peut comprendre de préférence un copolymère d'une diamine et d'un acide dicarboxylique ; et
(2) de 15 à 60 % en poids d'une dispersion contenue dans ladite résine ou ledit polymère thermoplastique à base de polyamide, comprenant :
(a) un copolymère ou un mélange comprenant un segment à base de polyamide et un segment à base de polyéther ; et
(b) un polymère comprenant au moins un monomère choisi parmi un polyalkylèneglycol, de préférence au moins un polyalkylèneglycol choisi parmi le polyéthylèneglycol, le polypropylèneglycol et le polytétraméthylène glycol, une polyoxyalkylène diamine, de préférence au moins une polyalkylène diamine choisie parmi la polyoxyéthylène diamine, la polyoxypropylène diamine et la polyoxytétraméthylène diamine, ainsi que leurs copolymères.

4. Bandage pneumatique selon la revendication 3, dans lequel la concentration de ladite dispersion contenue dans ladite résine ou ledit polymère thermoplastique à base de polyamide des couches individuelles (7A, 7B, 7C) dudit film multicouche de calandrage intérieur (4) augmente au moins à concurrence de 5 % pour chaque couche successive s'étendant à partir de ladite couche la plus interne (7A) jusqu'à et y compris la couche la plus externe (7C) du film multicouche de calandrage intérieur (4).

5. Bandage pneumatique selon au moins une des revendications précédentes, dans lequel ladite dispersion contenue dans la résine ou le polymère thermoplastique se présente sous la forme de domaines dispersés dans ledit polymère thermoplastique à base de polyamide.

6. Bandage pneumatique selon au moins une des revendications précédentes, dans lequel la couche la plus interne (7C) dudit film de calandrage intérieur (4) adjacente à la couche de carcasse de bandage pneumatique (3) à travers le revêtement RFL sur ledit film (4) possède un module de Young dans la plage de 10 à 18 MPa, la couche la plus externe (7C) dudit film de calandrage intérieur (4) possède un module de Young dans la plage de 13 à 24 MPa, et les couches intermédiaires (7B) du film entre les deux possèdent un module de Young qui augmente à concurrence d'au moins un MPa pour chaque couche successive s'étendant à partir de ladite couche la plus interne (7A) jusqu'à et y compris la couche la plus externe (7C) du film multicouche de calandrage intérieur (4).

7. Bandage pneumatique selon au moins une des revendications précédentes 2 à 6, dans lequel :
(i) la première et la seconde bande de caoutchouc (5A, 5B) comprennent au moins un élastomère à base diénique vulcanisable au soufre comprenant au moins un polymère constitué d'au moins un monomère choisi parmi l'isoprène et le 1,3 butadiène et d'un monomère de styrène avec au moins un monomère choisi parmi l'isoprène et le 1,3 butadiène, dans lequel ledit élastomère ne contient pas un copolymère d'isobutylène et d'un hydrocarbure diénique et/ou dans lequel :
(ii) la couche de carcasse de bandage pneumatique (3) comprend un élastomère à base diénique vulcanisable au soufre comprenant au moins un polymère constitué d'au moins un monomère choisi parmi l'isoprène et le 1,3 butadiène et d'un monomère de styrène avec au moins un monomère choisi parmi l'isoprène et le 1,3 butadiène, à l'exclusion d'un copolymère d'isobutylène et d'un hydrocarbure diénique.

8. Bandage pneumatique selon au moins une des revendications précédentes, dans lequel l'emplacement de l'épissure (6) est espacé par rapport à n'importe quelle épissure de nappe de carcasse du bandage pneumatique.

9. Bandage pneumatique selon au moins une des revendications précédentes 3 à 8, dans lequel le polymère thermoplastique à base de polyamide du film de calandrage intérieur (4) est un copolymère d'une diamine et d'un acide dicarboxylique comprenant au moins un acide dicarboxylique choisi parmi le nylon 6, le nylon 6-6, le nylon 4,6, le nylon 11, le nylon 12, le nylon 6,10 et le nylon 6,12; ou dans lequel le polymère thermoplastique à base de polyamide du film de calandrage intérieur (4) comprend au moins un élément choisi parmi le polycaprolactame (ou nylon 6) et un copolymère d'hexaméthylènediamine et d'acide adipique (ou nylon 6-6), et ledit copolymère dispersé comprend un segment de polyamide et un segment à base de polyéther.

10. Bandage pneumatique selon au moins une des revendications précédentes, dans lequel ledit adhésif RFL comprend un latex de résine de résorcinol-formaldéhyde/styrène-butadiène/vinylpyridine contenant de manière facultative un latex de caoutchouc de styrène-butadiène et contenant de manière facultative un isocyanate bloqué.

11. Procédé de préparation d'un bandage pneumatique contenant un film multicouche de calandrage intérieur (4) sur sa surface interne, dans lequel ledit film de calandrage intérieur (4) contient un revêtement adhésif RFL sur ses deux côtés et comprend de 2 à 7 couches (7A, 7B, 7C), dans lequel le procédé comprend le fait de :
(A) appliquer une seconde bande de caoutchouc (5) sur le tambour cylindrique de confection de bandage pneumatique (17) et en ligne avec l'axe dudit tambour ;
(B) appliquer et coller une première portion terminale du film multicouche de calandrage intérieur de bandage pneumatique (4) contenant ses première et seconde portions terminales, sur ladite seconde bande de caoutchouc (5A) sur ledit tambour (17) de confection de bandage pneumatique, dans lequel ladite seconde bande de caoutchouc (5A) s'étend sur la largeur axiale du film de calandrage intérieur (4) ;
(C) appliquer une première bande de caoutchouc (5B) sur ladite première portion terminale dudit film multicouche de calandrage intérieur (4) en ligne avec ladite seconde bande de caoutchouc (5A) et à l'opposé de cette dernière, et sur un côté opposé de la première portion terminale du film de calandrage intérieur (4), dans lequel ladite première bande de caoutchouc (5B) s'étend sur la largeur axiale du film multicouche de calandrage intérieur (4) ;
(D) envelopper ledit tambour cylindrique de confection de bandage pneumatique (17) avec ledit film multicouche de calandrage intérieur (4) dans une direction circonférentielle pour l'alignement d'une seconde portion terminale du film multicouche de calandrage intérieur (4) dans une relation de chevauchement avec ladite première couche de caoutchouc (5B) entre les deux pour former une épissure de calandrage intérieur (6) ;
(E) confectionner une couche de nappe de carcasse (3) dans une direction circonférentielle autour de ladite épissure de film de calandrage intérieur et sur cette dernière, les extrémités de la couche de nappe de carcasse (3) se chevauchant l'une l'autre pour former une épissure de couche de nappe de carcasse disposée à un endroit espacé de l'endroit correspondant à l'épissure de film de calandrage intérieur (6), avant de confectionner le reste des composants du bandage pneumatique par-dessus la couche de nappe de carcasse (3) pour obtenir un bandage pneumatique (1) possédant une cavité interne pour l'air ;
dans lequel ladite première bande de caoutchouc (5B) s'étend dans une direction circonférentielle au-delà de ladite épissure de calandrage intérieur (6) sur la surface interne du film multicouche de calandrage intérieur (4) pour lier en outre une combinaison d'une surface de ladite portion terminale interne du film multicouche de calandrage intérieur (4), dudit film de calandrage intérieur (4) et de ladite couche de caoutchouc de carcasse (3) ; et
dans lequel ladite seconde bande de caoutchouc (5A) surplombe ladite seconde portion terminale externe du film multicouche de calandrage intérieur (4) et ledit film multicouche de calandrage intérieur (4) adjacente à la cavité interne pour l'air dudit bandage pneumatique (1) et est liée à ladite portion et audit film.

12. Procédé selon la revendication 11, dans lequel les couches (7A, 7B, 7C) du film multicouche de calandrage intérieur (4) comprennent de 40 à 85 % en poids d'une résine ou d'un polymère thermoplastique à base de polyamide, de préférence d'un copolymère d'une diamine et d'un acide dicarboxylique ; et de 15 à 60 % en poids d'une dispersion qui y est contenue, comprenant au moins un élément choisi parmi :
(F) un copolymère ou un mélange comprenant un segment à base de polyamide et un segment d'élastomère à base de polyéther ; et
(G) un polymère comprenant au moins un monomère choisi parmi un polyalkylèneglycol, de préférence au moins un polyalkylèneglycol choisi parmi le polyéthylèneglycol, le polypropylèneglycol et le polytétraméthylène glycol, une polyoxyalkylène diamine, de préférence au moins une polyalkylène diamine choisie parmi la polyoxyéthylène diamine, la polyoxypropylène diamine et la polyoxytétraméthylène diamine, ainsi que leurs copolymères.

13. Procédé selon la revendication 12, dans lequel la concentration de ladite dispersion contenue dans ledit polymère thermoplastique à base de polyamide des couches individuelles (7A, 7B, 7C) dudit film multicouche de calandrage intérieur (4) augmente à concurrence d'au moins 5 % pour chaque couche successive s'étendant à partir de ladite couche la plus interne (7A) jusqu'à et y compris la couche la plus externe (7C) du film multicouche de calandrage intérieur (4).

14. Procédé selon au moins une des revendications 11 à 13, dans lequel la couche la plus interne (7A) dudit film de calandrage intérieur (4) adjacente à la couche de carcasse de bandage pneumatique (3) à travers le revêtement RFL sur ledit film (4) possède un module de Young dans la plage de 10 à 18 MPa, la couche la plus externe (7C) dudit film de calandrage intérieur (4) possède un module de Young dans la plage de 13 à 24 MPa, et les couches intermédiaires (7B) du film entre les deux possèdent un module de Young qui augmente à concurrence d'au moins un MPa pour chaque couche successive s'étendant à partir de ladite couche la plus interne (7A) jusqu'à et y compris la couche la plus externe (7C) du film multicouche de calandrage intérieur (4).

15. Procédé selon au moins une des revendications 11 à 14, dans lequel le procédé comprend en outre la vulcanisation du bandage pneumatique (1) dans un moule à une température élevée.
